# EUROPÄISCHE PATENTANMELDUNG

(11) **EP 0 778 107 A1**
(43) Veröffentlichungstag der Anmeldung: **11.06.1997**
(21) Anmeldenummer: 96114057.1
(22) Anmeldetag: 03.09.1996
(51) Int. Cl.: B25B 5/12, F16F 9/49, F16F 9/02, F16F 15/023, F15B 15/22

(54) **Kniehebelspannvorrichtung**

(30) Priorität: 05.12.1995 DE 29519232 U
(71) Anmelder: TÜNKERS MASCHINENBAU GmbH, D-40880 Ratingen (DE)
(72) Erfinder: Tünkers, Josef-Gerhard, 40878 Ratingen (DE)
(74) Vertreter: Beyer, Rudi

(57) **Zusammenfassung**

Die Erfindung eine Kniehebelspannvorrichtung, insbesondere zur Verwendung im Karosseriebau der Kraftfahrzeugindustrie, mit einer Drosselvorrichtung zum Abbremsen bewegter Massen.

## Beschreibung

Die Erfindung betrifft eine Kniehebelspannvorrichtung, insbesondere zur Verwendung im Karosseriebau der Kfz-Industrie.

Es ist bekannt, Pneumatik- oder Hydraulikzylinder mit Endlagendämpfungsvorrichtungen auszustatten, um die kinetische Energie, die durch bewegte Massen entsteht, entsprechend abzubremsen und dadurch Beschädigungen zu vermeiden. Solche Endlagendämpfungen können in dem Zylinder integriert sein, um beim Ein- und Ausfahren der Kolben den Dämpfungseffekt zu erzielen. Als Dämpfungsmedium kann Luft oder Öl verwendet werden, das durch gedrosselte Bohrungen verdrängt, also gestaut wird, um die Bewegung des Kolbens entsprechend zu verlangsamen und dadurch einen zu harten Anschlag zu vermeiden. Diese integrierte Endlagendämpfung befindet sich immer am Hubende, das heißt in der eingefahrenen oder ausgefahrenen Stellung. Eine Zwischenstellung ist nicht möglich und auch nicht beabsichtigt.

Bei Kniehebelspannvorrichtungen der im Oberbegriff des Patentanspruches 1 vorausgesetzten Art ist es vorbekannt, dem den Zylinderspannraum stirnseitig verschließenden Deckel eine Dämpfungsvorrichtung in Form eines Kunststoffblockes zuzuordnen, gegen den der Kolben beim Öffnungshub im Bereich seiner Endstellung federnd anschlägt. Mit dem Spannarm sind dabei oftmals relativ große Massen verbunden, die bei einem plötzlichen Stop der Öffnungsbewegung sonst zu erheblichen Beschädigungen der betreffenden Kniehebelspannvorrichtung führen können. Zum Beispiel sind mit dem Spannarmende Hebelkonstruktionen und Kulissensteine durch Schrauben oder dergleichen verbunden. Die Bewegungen des Spannarmes können dabei zwischen 45 und 185 Grad ausmachen.

Elastische Dämpfungsvorrichtungen besitzen jedoch den Nachteil, daß beim plötzlichen Abbremsen der bewegten Massen relativ große Rückstellkräfte durch die federelastische Verformung des betreffenden Teils der Dämpfungsvorrichtung, zum Beispiel eines Polyamids, auftreten können, was unerwünscht ist. Auch ist eine Veränderung des Dämpfungsvermögens während des Betriebs nicht möglich.

Der Erfindung liegt die Aufgabe zugrunde, eine Kniehebelspannvorrichtung gemäß dem Oberbegriff des Schutzanspruches 1 so auszugestalten, daß beim Abbremsen der bewegten Massen keine federnden Rückstellkräfte auftreten, wobei die Dämpfungsvorrichtung besser als bisher je nach den konkret vorliegenden Betriebsbedingungen in ihrem Dämpfungsverhalten einstellbar sein soll.

Die Aufgabe wird durch die in **Patentanspruch 1** wiedergegebenen Merkmale gelöst.

Bei Ausgestaltung gemäß Schutzanspruch 1 ergibt sich eine besonders einfache Konstruktion. Ein besonderer Körper, bestehend aus einem Polymer mit kautschukartigen Eigenschaften, der in den Zylinderspannraum hineinragt, braucht nicht mehr vorgesehen zu werden. Vielmehr wird das zum Antrieb des Kolbens und damit der Kniehebelspannvorrichtung ohnehin verwendete Druckmittel, insbesondere Luft, selbst als Drosselmedium, also zur Abbremsung der bewegten Massen herangezogen. Dadurch verschleißt das Medium selbst nicht, da die Luft immer wieder beim Antrieb der Kniehebelspannvorrichtung erneuert wird. Auch tritt keine unerwünschte federnde Rückstellkraft, die auf den Kolben der Kniehebelspannvorrichtung einwirkt, auf, die diesen zumindest zu einem gewissen Teil zurückschleudern könnte.

Da sich der Anschlußkanal und die Drosselvorrichtung zum Beispiel in dem endstirnseitigen Deckel des Zylinderspannraumes integrieren lassen, tritt auch keine nach außen sichtbare Vergrößerung der Bauabmessungen der Kniehebelspannvorrichtung auf, so daß gegebenenfalls gebaute Kniehebelspannvorrichtungen durch Austausch dieses Deckels und des darin vorhandenen Anschlußkanals mit Drosselvorrichtung auch umgerüstet werden können, ohne daß nach außen am Einsatzort irgendwelche Änderungen vorzunehmen wären. Dies gilt insbesondere für die Anschlüsse zur Zuführung des Druckmediums, insbesondere von Luftdruck.

Eine besonders vorteilhafte Ausführungsform der Erfindung ist in **Patentanspruch 2** beschrieben. Bei dieser ist die Drosselvorrichtung gesteuert und/oder einstellbar. Dadurch ergibt sich die Möglichkeit, die Drosselvorrichtung je nach den Betriebsbedingungen einzustellen, so daß sich eine besonders feinfühlige und genaue Dämpfungswirkung erzielen läßt.

Um die Endlagendämpfung über einen größeren Bereich von 0 bis 135 Grad Schwenkwinkel zu ermöglichen, ist die Dämpfungsvorrichtung in ihrer axialen Erstreckung in bezug auf den Kolben längenveränderlich und arretierbar - **Patentanspruch 3**.

Hierfür bietet **Patentanspruch 4** eine besonders vorteilhafte Ausführungsform, da bei dieser die Dämpfungsvorrichtung stufenlos längenverstellbar ist.

Gemäß **Patentanspruch 5** weist die Drosselvorrichtung eine in den Kanalquerschnitt hineinragende, arretierbare Schraube auf, die nach außen hin abgedichtet ist und die den Strömungsquerschnitt des Anschlußkanalquerschnittes je nach Einschraublage verändert. Dadurch ist es möglich, zum Beispiel mittels eines Schraubendrehers, den Drosselströmungsquerschnitt zu verändern, um die Dämpfungswirkung feinfühlig aufgrund der tatsächlich vorliegenden Betriebsbedingungen einstellen und arretieren zu können.

Die Ausführungsform nach **Patentanspruch 6** trägt zu einer weiteren Verringerung der äußeren Bauabmessungen bei, da hierbei die Drosselvorrichtung in dem endseitigen Deckel des Zylinders angeordnet ist.

Eine besonders vorteilhafte Ausführungsform ist in **Patentanspruch 7** dargestellt.

Dies gilt auch für die Ausführungsform nach **Patentanspruch 8**, bei welcher ein Stützkolben im axialen Längenabstand zu dem endseitigen Deckel des Zylinders angeordnet ist, der druckmitteldicht an der Zylinderinnenwand des Spannraumes anliegt.

Entweder durch stufenlose oder sonstige Veränderung der axialen Länge des Drosselkörpers mit seinem Stützkolben läßt sich die Drosselvorrichtung je nach dem gewünschten Schwenkwinkel des Spannarmes verändern. Dies kann zum Beispiel bei der Ausführungsform nach **Patentanspruch 9** dadurch geschehen, daß der Stützkolben an der dem Kolben zugekehrten Stirnfläche einen Vorsprung aufweist, der je nach dem gewünschten Schwenkwinkel längeneinstellbar ist. Diese Längeneinstellbarkeit kann stufenlos, oder aber auch durch Materialabtrag geschehen, in dem zum Beispiel der Vorsprung abgedreht wird, um je nach Schwenkwinkel des Spannarmes den gewünschten Dämpfungseffekt zu erzielen.

Zu einer Verringerung von Einzelteilen trägt die Ausführungsform nach **Patentanspruch 10** bei.

Besonders vorteilhafte Ausführungsformen sind in den **Patentansprüchen 11** und **12** beschrieben, die außerdem zu einer Verringerung von Einzelteilen und der Forderung nach einer robusten, auch über viele Bearbeitungszyklen zuverlässigen Ausführungsform beitragen. Derartige Kniehebelspannvorrichtungen werden mit besonderem Vorteil in der Kfz-Industrie eingesetzt.

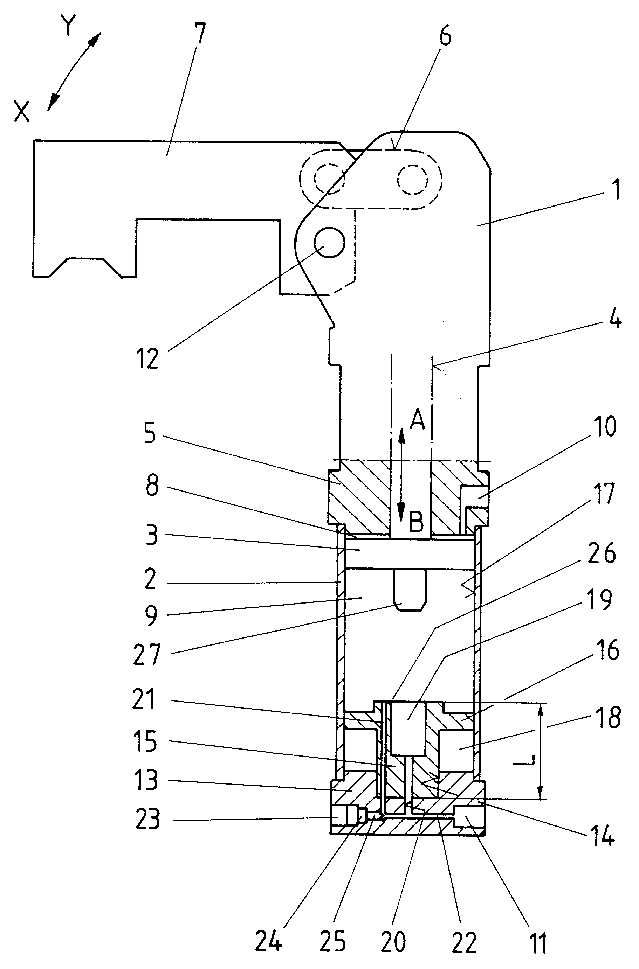

In der Zeichnung ist die Erfindung an einem Ausführungsbeispiel - teils in der Seitenansicht, teils im Axiallängsschnitt - veranschaulicht.

Das Bezugszeichen 1 bezeichnet einen Spannkopf, an den sich axial ein Zylinder 2 anschließt, in dem längsverschieblich und dichtend ein Kolben 3 angeordnet ist. Der Zylinder 2 ist bei der dargestellten Ausführungsform im Querschnitt kreisförmig innen und außen ausgebildet, er kann aber zum Beispiel auch flachoval ausgebildet sein, so daß der Kolben 3 entsprechend gestaltet ist. Dichtungen sind im einzelnen nicht veranschaulicht worden.

Mit dem Kolben 3 ist eine Kolbenstange 4 verbunden, die den Zylinder 2 und den Spannkopf 1 teilweise axial durchgreift. Die Kolbenstange 4 durchgreift außerdem einen Deckel 5, in dem sie durch eine nicht dargestellte Dichtung druckmitteldicht geführt ist.

Des weiteren läßt sich aus der Zeichnung entnehmen, daß die Kolbenstange 4 an ihrem Ende mit einer Kniehebelgelenkanordnung verbunden ist, der ein Spannarm 7 zugeordnet ist.

Die Kniehebelgelenkanordnung 6 ist nur schematisch angedeutet worden. Einzelteile wurde im einzelnen nicht veranschaulicht.

Der Spannarm 7 ist in Richtung X bzw. Y je nach Beaufschlagung des Kolbens 3 mit Druckmitteldruck, insbesondere mit Luftdruck, schwenkbeweglich. Der Öffnungswinkel dieses Spannarmes kann variabel und zum Beispiel bis maximal 135 Grad, betragen.

Der Kolben 3 teilt den Zylinder 2 in einen Zylinderrückhubraum 8 und in einen Zylinderspannraum 9 auf, die durch den Kolben 3 druckmitteldicht gegeneinander abgedichtet sind.

Dem Zylinderrückhubraum 8 wird über einen Anschlußkanal 10 und dem Zylinderspannraum 9 über einen Anschlußkanal 11 zum Beispiel Luftdruck zugeführt.

Der Spannarm 7 schwenkt bei seiner Bewegung in Richtung X bzw. Y um die Schwenkachse 12.

Auf seiner dem Deckel 5 abgekehrten Seite ist der Zylinder 2 über einen Deckel 13 endseitig druckmitteldicht abgeschlossen. Weder die Dichtungen im Bereich des Deckels 5 noch im Bereich des Deckels 13 sind im einzelnen veranschaulicht.

Der Deckel 13 besitzt eine zentrische Aussparung 14 in der ein Dämpfungskörper 15 formschlüssig angeordnet ist.

Materialmäßig einstückig mit dem Dämpfungskörper 15 ist im axialen Abstand zum Deckel 13 ein Stützkolben 16 angeordnet, der an der Zylinderinnenwand 17 über nicht dargestellte Dichtungen druckmitteldicht abgedichtet ist.

Wie man aus der Zeichnung erkennt, ist zwischen dem Stützkolben 16 und dem Deckel 13 ein Axialraum 18 vorhanden, der einerseits durch den Stützkolben 16 und andererseits durch den Deckel 13 druckmitteldicht abgedichtet ist.

Der Dämpfungskörper 15 weist einen zentrisch angeordneten und in den Zylinderspannraum 9 endstirnseitig ausmündenden Dämpfungsraum 19 auf, in den ein Kanal 20 ausmündet, der an den Anschlußkanal 11 druckmittelleitend angeschlossen ist.

Parallel und mit Abstand zu dem Dämpfungsraum 19 sowie mit seiner Längsachse parallel zur Längsachse des Zylinders 2 verlaufend ist ein Drosselanschlußkanal 21 angeordnet, der ebenfalls wie der Kanal 20 über einen radial zum Deckel 13 verlaufenden Radialkanal 22 an den Anschlußkanal 11 angeschlossen ist. Der Radialkanal 22 ist über den Drosselanschlußkanal 21 in Richtung auf eine Öffnung 23 mit Gewinde verlängert, in der ein in Richtung des Radialkanals 22 stufenlos verstellbares Drosselventil 24 eingeschraubt angeordnet ist. Das Drosselventil 24 weist außerdem einen verjüngten Abschnitt 25 auf, der in den lichten Querschnitt des Drosselanschlußkanals 21 eingreift. Durch Längenverstellung des Drosselkörpers 24 läßt sich somit der Strömungsquerschnitt verändern.

Der Dämpfungskörper 15 weist außerdem einen über den Stützkolben 16 in den Zylinderspannraum 9 hineinragenden Vorsprung 26 auf. Die Gesamtlänge L des Dämpfungskörpers 15 läßt sich bei der dargestellten Ausführungsform dadurch ändern, daß die dem Vorsprung 26 gegenüberliegende und in den Deckel 13 eingreifende Stirnseite des Dämpfungskörpers 15 durch Materialabtrag abgetragen wird, je nach gewünschtem Schwenkwinkel des Spannarmes 7.

Statt dessen kann der Dämpfungskörper 15 aber auch aus zwei oder mehreren teleskopförmigen ineinander verstellbaren Teilen bestehen. Diese Teile können zum Beispiel durch Schraubgewinde miteinander verbunden sein.

Außerdem kann der Dämpfungskörper 15 einstückig mit dem Deckel 13 ausgebildet sein und sich ebenfalls hinsichtlich seiner Länge L entsprechend dem jeweils gewünschten Schwenkwinkel einstellen bzw. verändern lassen.

In manchen Fällen ist es auch möglich, die Länge hydraulisch, zum Beispiel durch entsprechende Hubverstellung eines Kolbens in einem Zylinder einzustellen, um dadurch den jeweils gewünschten Schwenkwinkel des Spannarmes 7 Rechnung zu tragen und die jeweils gewünschte Dämpfungswirkung zu erzielen.

Wie man erkennt, ist die Kolbenstange 4 über den Kolben 3 in den Zylinderspannraum 9 verlängert ausgebildet und hier als Dämpfungskolben 27 gestaltet. Die Abmessungen dieses Dämpfungskolbens 27 sind auf die Querschnittsabmessungen des Dämpfungsraumes 19 abgestimmt, derart, daß bei einer entsprechenden Längsverschiebung in Richtung B, also bei einer Schwenkbewegung des Spannarmes 7 in Richtung Y, der Dämpfungskolben 27 von einem gewissen Öffnungshub des Kolbens 3 in den Dämpfungsraum 19 eintaucht und dadurch den Zylinderspannraum 9 von dem Dämpfungsraum 19 druckmitteldicht abschließt. Hierzu kann der Dämpfungskolben 27 an seiner Außenumfangsfläche mit einer oder mehreren Dichtungen versehen sein, die den Dämpfungsraum 19 von dem Zylinderspannraum 9 druckdicht abschließen. Dadurch kann kein Druckmittel, insbesondere Luft, aus dem Zylinderspannraum 9 über den Dämpfungsraum 19 und den Anschlußkanal 11 entweichen. Vielmehr wird die zwischen dem Kolben 3 und dem Stützkolben 16 eingespannte Restluftmenge über den Drosselanschlußkanal 21 und die durch Einstellung des Drosselventils 24 gebildete Abströmöffnung zum Anschlußkanal 11 verdrängt, wodurch der gewünschte Dämpfungseffekt erzielt wird.

Auch der Vorsprung 26 braucht nicht materialmäßig einstückig mit dem Dämpfungskörper 15 ausgestaltet zu sein. Vielmehr kann es sich hierbei auch um einen durch Schrauben oder dergleichen ausgebildeten Stopfen oder Ring handeln, der stufenlos einstellbar und auf das gewünschte Dämpfungsvermögen und damit auf den Schwenkwinkel X bzw. Y einstellbar ist oder aber auch nur als Einspannhilfe beim Verkürzen der Gesamtlänge L dient.

Statt eines durch Schraubgewinde zu verstellenden Drosselventils 24 läßt sich hier auch ein Kolben mit Vorsprung, der zum Beispiel hydraulisch oder in sonstiger Weise angeordnet sein kann, verwenden. Statt eines verjüngten Abschnittes 25 läßt sich auch eine Lochscheibe oder dergleichen hier einsetzen, die bei Bedarf austauschbar ist, oder nach Art einer Blende in ihrem Strömungsquerschnitt verändert werden kann.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: Spannkopf
- 2: Zylinder
- 3: Kolben
- 4: Kolbenstange
- 5: Deckel
- 6: Kniehebelgelenkanordnung
- 7: Spannarm
- 8: Zylinderrückhubraum
- 9: Zylinderspannraum
- 10: Anschlußkanal
- 11: Anschlußkanal
- 12: Schwenkachse
- 13: Deckel
- 14: Aussparung
- 15: Dämpfungskörper, Dämpfungsvorrichtung
- 16: Stützkolben
- 17: Zylinderinnenwand
- 18: Axialraum
- 19: Dämpfungsraum
- 20: Kanal
- 21: Drosselanschlußkanal
- 22: Radialkanal, Kanalabschnitt
- 23: Öffnung
- 24: Drosselventil
- 25: Abschnitt, verjüngter
- 26: Vorsprung
- 27: Dämpfungskolben
- A: Verschiebeweg des Kolbens und der Kolbenstange
- B: Verschiebeweg des Kolbens und der Kolbenstange
- L: Länge des Drosselkörpers
- X: Schwenkbewegung des Schwenkarmes 7
- Y: Schwenkbewegung des Schwenkarmes 7

## Patentansprüche

1. Kniehebelspannvorrichtung, insbesondere zur Verwendung im Karosseriebau der Kfz-Industrie, mit einem Spannkopf (1) und einem sich in axialer Verlängerung daran anschließenden Zylinder (2), in dem ein abwechselnd beidseitig durch Druckmitteldruck, vorzugsweise durch Luftdruck, zu beaufschlagender Kolben (3) längsverschieblich und dichtend geführt ist, der mit seiner Kolbenstange (4) den Zylinder (2) und den Spannkopf (1) durchgreift, wobei am freien Ende der Kolbenstange (4) innerhalb des Gehäuses eine Kniehebelgelenkanordnung (6) befestigt ist, der ein Spannarm (7) zugeordnet ist, wobei der Kolben (3) den Zylinder (2) in einen Zylinderrückhubraum (8) und in einen Zylinderspannraum (9) unterteilt, und daß der Zylinderspannraum (9) stirnendseitig durch einen Deckel (13) dichtend verschlossen ist, dem eine Dämpfungsvorrichtung zum Abbremsen der Öffnungsbewegung des Kolbens (3) zugeordnet ist, wobei der Zylinderrückhubraum (8) und der Zylinderspannraum (9) über je einen Anschlußkanal (10, 11) abwechselnd entweder an die Druckmittelquelle anzuschließen oder zu entlüften ist, **dadurch gekennzeichnet,** daß der den Zylinderspannraum (9) entlastende oder mit der Druckmittelquelle zu verbindende Anschlußkanal (11) von einem gewissen Öffnungshub des Kolbens (3) an von dem Zylinderspannraum (9) abgesperrt ist, woraufhin der Zylinderspannraum (9) nur noch über eine Drosselvorrichtung (21, 24) entlüftet ist.

2. Kniehebelspannvorrichtung nach Anspruch 1, **dadurch gekennzeichnet,** daß die Dämpfungsvorrichtung (15) gesteuert und/oder einstellbar ist.

3. Kniehebelspannvorrichtung nach Anspruch 1 und/oder 2, **dadurch gekennzeichnet,** daß die Dämpfungsvorrichtung (15) in Abhängigkeit von dem Öffnungswinkel des Spannarmes (7) vorzugsweise stufenlos einstellbar, insbesondere längenverstellbar ist.

4. Kniehebelspannvorrichtung nach Anspruch 3, **dadurch gekennzeichnet,** daß die Dämpfungsvorrichtung (15) stufenlos längenverstellbar ist.

5. Kniehebelspannvorrichtung nach Anspruch 1 oder einem der folgenden, **dadurch gekennzeichnet,** daß die Dämpfungsvorrichtung (15) ein in den Anschlußkanalquerschnitt oder in einen damit verbundenen Kanalabschnitt (22) hineinragendes, den Strömungsquerschnitt veränderndes, arretierbares Drosselventil (24) umfaßt, das nach außen hin abgedichtet ist.

6. Kniehebelspannvorrichtung nach Anspruch 1 oder einem der folgenden, **dadurch gekennzeichnet,** daß die Dämpfungsvorrichtung (15) in dem Deckel (13) des Zylinders (2) angeordnet ist.

7. Kniehebelspannvorrichtung nach Anspruch 1 oder einem der folgenden, **dadurch gekennzeichnet,** daß dem Deckel (13) des Zylinderraumes ein im wesentlichen an seiner Außenmantelfläche zylindrischer Dämpfungskörper (15) zugeordnet ist, der parallel zu seiner Längsachse von einem Kanal (20) durchsetzt ist, der an den Anschlußkanal (11) für die Druckmittelzu- und -abfuhr des Zylinderspannraumes (9) angeschlossen ist und der in einen Dämpfungsraum (19) mit erheblich vergrößertem Durchmesser mündet, der seinerseits an seinem Ende in den Zylinderspannraum (9) ausmündet.

8. Kniehebelspannvorrichtung nach Anspruch 7, **dadurch gekennzeichnet,** daß der Dämpfungskörper (15) an seinem den Dämpfungsraum (19) aufweisenden Endabschnitt mit einem Stützkolben (16) versehen ist, der druckmitteldicht an der Zylinderinnenwand (17) des Zylinderraumes anliegt und daß der Stützkolben (16) in einem gewissen Längenabstand von der Stirninnenseite des Deckels (13) angeordnet ist.

9. Kniehebelspannvorrichtung nach Anspruch 8, **dadurch gekennzeichnet,** daß der Stützkolben (16) an seiner dem Kolben (3) zugekehrten Stirnfläche einen Vorsprung (26) aufweist.

10. Kniehebelspannvorrichtung nach Anspruch 9, **dadurch gekennzeichnet,** daß der Vorsprung (26) materialmäßig einstückig mit dem Stützkolben (16) ausgebildet ist.

11. Kniehebelspannvorrichtung nach Anspruch 8 oder einem der folgenden, **dadurch gekennzeichnet,** daß der Kanal (20) koaxial zur Längsachse des Zylinderspannraumes (9) verläuft und daß parallel und mit Abstand zu dem Kanal (20) ein Drosselanschlußkanal (21) angeordnet ist, der einerseits stirnseitig wie der Dämpfungsraum (19) in den Zylinderspannraum (9) und an der anderen Seite an einen Radialkanal (22) angeschlossen ist, in den das Drosselventil (24, 25), den Strömungsquerschnitt verändernd, hineinragt und der an die Druckmittelquelle angeschlossen bzw. zu entlüften ist.

12. Kniehebelspannvorrichtung nach Anspruch 1 oder einem der folgenden, **dadurch gekennzeichnet,** daß die Kolbenstange (4) des Kolbens (3) mit einem Dämpfungskolben (27) versehen ist, der dichtend in den Dämpfungsraum (19) eingreift und dadurch den Zylinderspannraum (9) von der Anschlußöffnung über den Kanal (20) absperrt.
